# FASCICULE DE BREVET EUROPEEN

(11) **EP 1 773 164 B1**
(45) Date de publication et mention de la délivrance du brevet: **17.11.2010**
(21) Numéro de dépôt: 05775768.4
(22) Date de dépôt: 07.06.2005
(51) Int. Cl.: A47J 42/18

(54) **CASSETTE UNIVERSELLE DESTINEE AU REGLAGE DE LA MOUTURE SUR UN MOULIN A CONDIMENTS, MECANIQUE OU ELECTRIQUE, OU SUR UN APPAREIL DESTINE A REDUIRE UN ALIMENT EN FINES PORTIONS**
MEHRZWECKKASSETTE ZUR EINSTELLUNG EINER MAHLVORRICHTUNG EINER MECHANISCHEN ODER ELEKTRISCHEN GEWÜRZMÜHLE ODER EINER VORRICHTUNG ZUM ZERBRÖSELN VON NAHRUNGSMITTELN
MULTIPURPOSE CASSETTE FOR ADJUSTING A GRINDER ON A MECHANICAL OR ELECTRICAL CONDIMENT MILL OR ON A DEVICE FOR FINELY BREAKING FOODSTUFF

(30) Priorité: 28.07.2004 FR 0408309
(43) Date de publication de la demande: 18.04.2007
(73) Titulaire: PSP (SAS), 25440 Quingey (FR)
(72) Inventeur: LAUZET, Maurice, F-25440 Chenecey Buillon (FR)
(74) Mandataire: Poupon, Michel
(86) Numéro de dépôt international: PCT/FR2005/001387
(87) Numéro de publication internationale: WO 2006/024709

(56) Documents cités:
- WO-A1-2005/009187
- DE-A1- 19 514 794
- FR-A- 2 857 842
- US-A1- 2002 117 566

## Description

La présente invention concerne une cassette universelle et autonome destinée au réglage de la finesse de la mouture dans un moulin à condiments ou dans un appareil destiné à réduire un aliment en fines portions.

Le réglage de la mouture d'un condiment tel que le poivre, ou de la réduction en poudre, en lamelles ou en copeaux d'un aliment, est généralement réalisé au moyen d'un écrou. Ce dernier est monté sur l'axe de manoeuvre et se dévisse afin d'assurer le réglage de la mouture ou de la réduction d'un aliment. Ce type de dispositif, à savoir le dévissage d'un écrou, présente l'inconvénient majeur de se dérégler fréquemment.

Un dispositif similaire est décrit dans le document US 2002/0117566 A.

Cependant, le dispositif de réglage de la mouture tel que décrit dans la demande de brevet 04 02299, non publiée, dont est également titulaire la demanderesse, décrit un dispositif de mouture dans lequel le mouvement de rotation de la bague de commande entraîne un mouvement de translation d'une pièce support cuvette, permettant ainsi de faire varier la position relative entre la poire et la cuvette, réalisant ainsi la mouture du condiment. Ce système présente notamment l'avantage de ne pas se dérégler.

Par ailleurs, l'adaptation d'un système plus élaboré présente l'inconvénient de nécessiter un arrangement de ce système à chaque forme de moulin. Or les moulins possèdent des corps dont les formes et les dimensions sont très variables, ce qui engendrerait un coût important pour adapter le système de réglage de la mouture à chaque forme de moulin.

L'invention se propose de remédier aux divers inconvénients précités grâce à un dispositif universel de réglage, qui se place à la base du moulin et qui s'adapte sur un grand nombre de corps de moulin, simplement en adaptant une virole de décor.

A cet effet, la présente invention a pour objet un dispositif universel destiné au réglage de la mouture d'un condiment ou de la réduction d'un aliment comme défini dans la revendication 1.

La suite de la description concerne particulièrement un moulin à poivre mécanique. Cependant, le dispositif de la cassette universelle pourra s'appliquer à tous les types de montage permettant de réduire en poudre ou en lamelles des produits alimentaires, tels que des broyeurs, des râpes ou des couteaux à titre d'exemple non limitatif, ainsi que des appareillages électriques comme les moulins à poivre électrique par exemple.

Les moulins destinés notamment aux condiments, tel que le poivre, sont généralement constitués de divers éléments, notamment un réservoir destiné à loger les condiments ainsi qu'un mécanisme de broyage. Ce dernier est constitué notamment d'une rondelle se fixant sur le corps du moulin, cette rondelle étant surmontée de la coulisse support cuvette, qui s'encastre dans une bague de commande de réglage de la mouture. Le mécanisme de mouture proprement dit est constitué notamment d'une partie femelle, dénommée ci-après cuvette, qui s'emboîte avec une partie mâle, dénommée ci-après poire, disposée dans la coulisse support cuvette.

On comprendra mieux l'invention en référence aux dessins annexés sur lesquels :

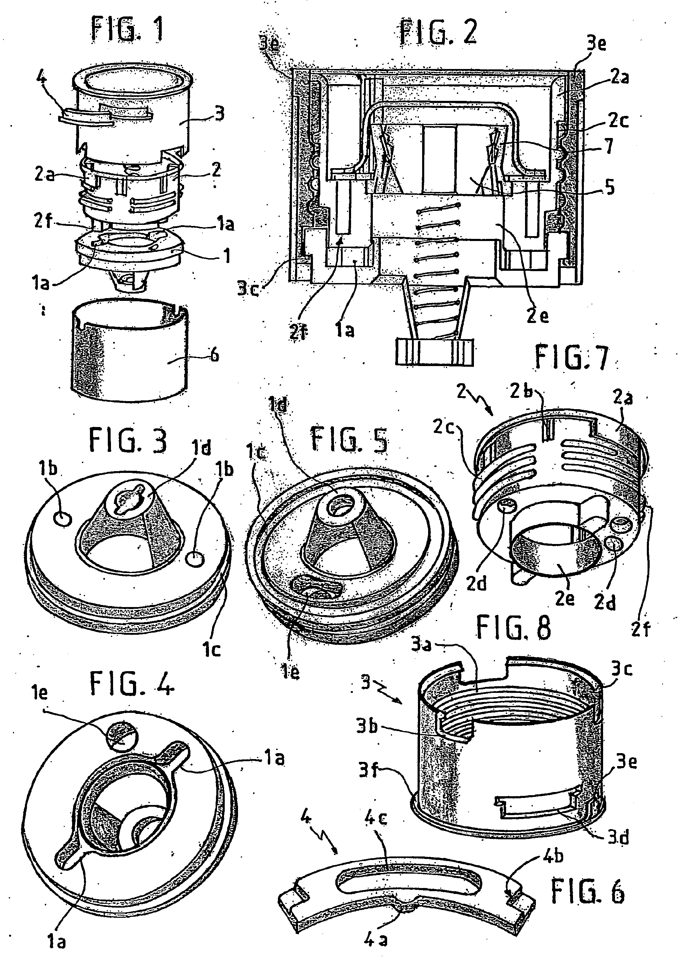

- la figure 1 est une représentation de tous les éléments du moulin, avant leur insertion,
- la figure 2 est un exemple de montage des différents éléments du moulin entre eux,
- la figure 3 est une représentation détaillée de la rondelle de fixation sur sa face inférieure dans un moulin mécanique,
- la figure 4 est une représentation détaillée de la face supérieure de la rondelle de fixation dans un moulin électrique,
- la figure 5 est une représentation détaillée de la face inférieure de la rondelle de fixation dans un moulin électrique,
- la figure 6 est une représentation détaillée de la butée mobile,
- la figure 7 est une représentation détaillée de la coulisse support cuvette,
- la figure 8 est une représentation détaillée de la bague de commande.

Une rondelle de fixation 1 assure la fixation de la cassette universelle selon l'invention sur tous les corps de moulin. Cette rondelle 1 est fixée de façon définitive sur le corps du moulin (non représenté). Elle est munie de deux logements 1a disposés sur la face supérieure de la rondelle 1. Ces logements 1a sont destinés à empêcher la rotation de la coulisse support cuvette 2.

La rondelle de fixation 1 est également munie de deux trous filetés 1b destinés à l'insertion de vis permettant la fixation de la cassette universelle. Sur sa face inférieure, la rondelle 1 comprend une collerette 1c, destinée à recevoir la bague de commande du système de réglage de la mouture. La face inférieure de la rondelle de fixation 1 comprend également un pont 1d, disposé au centre de la rondelle 1, assurant la liaison avec l'axe de manoeuvre de la poire 5.

Il est possible de réaliser une liaison pivot, en munissant le pont de part et d'autre d'un dispositif d'arrêt, tel qu'un anneau d'arrêt à titre d'exemple non limitatif. Ce système de liaison assure une position fixe de la poire 5.

Le moulin comprend également une pièce, appelée coulisse support cuvette 2. Cette pièce est munie d'une butée 2a sur sa partie supérieure externe, limitant le mouvement de la bague de commande 3. Sur sa partie supérieure externe, au même niveau que la butée 2a, des encoches 2b assurent l'indexation, permettant ainsi de régler la finesse de mouture.

Là coulisse support cuvette 2 est munie en son centre d'une cuvette 7 et d'une poire 5. C'est le mouvement de ces deux éléments l'un par rapport à l'autre qui assurera la mouture du condiment.

Sous la butée 2a fixe et les encoches 2b, toujours sur la face externe, un filetage 2c assure la fixation avec la bague de commande 3. Ce filetage 2c est interrompu à certains endroits afin d'éviter tout engorgement lors de la présence de poussières. La face inférieure de la coulisse support cuvette 2 est munie de deux logements 2d, destinés à fixer la pièce 2 sur le corps du moulin au moyen de vis.

Le centre de la coulisse support cuvette 2 est muni d'une jupe 2e s'insérant dans la rondelle de fixation 1 et empêchant toute remontée de condiment dans le moulin. La jupe 2e est équipée sur sa face externe de deux bossages 2f s'insérant dans les logements 1a de la rondelle de fixation 1, de manière à ce qu'aucun mouvement de la coulisse support cuvette 2 par rapport à la rondelle de fixation1 ne soit possible.

La coulisse support cuvette 2 est vissée dans la bague de commande 3. Cette bague de commandé 3, représentant la partie supérieure du moulin, est munie d'un filetage interne 3a, correspondant au filetage externe 2c de la coulisse support cuvette 2, et permettant le déplacement de cette dernière via la bague de commande 3.

Trois surfaces d'appui 3b et des clips 3c sont disposés sur la face inférieure de la bague 3, et assurent la fixation de cet élément avec la rondelle de fixation 1. Un logement 3d est prévu sur la face supérieure de la bague 3 pour insérer la butée mobile 4.

La face supérieure de la bague 3 est également munie d'ergots 3e, destinés à entraîner mécaniquement la bague 3 grâce à une pièce de décor, qui sera réalisée indifféremment en bois, en métal ou en plastique.

Sur sa face supérieure, la bague de commande 3 est munie d'une collerette 3f constituant une surface d'appui en matière plastique en contact avec la table afin d'éviter toute rayure, en cas d'utilisation d'une virole de décor 6 en métal. Cette collerette 3f permet également de masquer les défauts de cylindricité que l'on peut rencontrer sur les viroles décor en acier ou en bois.

La virole de décor 6 sera maintenue en place d'un côté par la collerette, de l'autre par le corps du moulin.

Après insertion de la coulisse support cuvette 2 avec la bague de commande 3, une butée mobile 4 est mise en place sur la bague de commande 3. Cette butée 4 vient en appui sur la butée fixe 2a de la coulisse support cuvette 2, assurant ainsi le réglage en position maxi.

Cette butée 4 mobile est constituée d'un doigt d'indexage 4a qui se positionne dans les encoches 2b de la coulisse support cuvette 2, et assure ainsi le réglage de la finesse de la mouture, grâce à un repérage sensitif de la position de la mouture.

L'une des extrémités de la butée mobile 4 présente une forme en queue d'aronde 4b, ce qui assure le maintien de la butée 4 dans son logement 3d, sans qu'elle risque d'être éjectée lors de la rotation de la bague de commande 3.

De plus, afin que la butée mobile 4 ne soit pas trop rigide, elle présente en son centre un dégagement 4c, donnant de la souplesse au doigt d'indexage 4a.

L'ensemble formé par la bague de commande 3, la butée mobile 4 et la coulisse support cuvette 2 est inséré sur la rondelle de fixation 1 par clippage. Les bossages 2f et la jupe 2e de la coulisse support cuvette 2 s'insèrent dans les logements 1a prévus à cette effet sur la rondelle de fixation 1.

Lors d'un mouvement de la bague de commande 3, la coulisse support cuvette 2 présente un mouvement axial, modifiant ainsi la position relative de la cuvette et de la poire.

En position extrême, le montage des différents éléments composant le moulin fait que l'on obtient soit un contact acier sur acier des deux pièces, soit une ouverture. Dans le cas du poivre, cette ouverture sera de l'ordre de trois millimètre environ, et sera variable en fonction du condiment ou de l'aliment réduit en morceaux ou en lamelles.

La cassette universelle selon l'invention est constituée de l'ensemble formé par la bague de commande 3 munie du doigt d'indexage, de la coulisse support cuvette 2 et de la rondelle de fixation 1. Cette cassette reçoit la cuvette et permet un montage et un positionnement précis de l'axe et de la poire. La cuvette voit sa position modifiée par rapport à la poire, restant fixe axialement, ce qui permet ainsi de régler la mouture du condiment

La rotation de la bague de commande 3 dans un sens ou dans l'autre entraîne un mouvement linéaire de la coulisse support cuvette 2, grâce aux filetages 2a et 3a, ce qui a pour effet de modifier la position relative entre la cuvette et la poire, et d'assurer la mouture du condiment.

L'entraînement mécanique de la bague de commande 3 réalisé grâce aux ergots 3e évite l'utilisation de colle, qui peut présenter parfois des difficultés d'utilisation selon le type de matériau utilisé.

La cassette universelle telle qu'elle vient d'être décrite peut également s'appliquer aux moulins électriques. Le principe est le même que celui qui vient d'être décrit, avec cependant quelques différences structurelles des éléments du moulin. Ainsi, la coulisse support cuvette 2 réalise un mouvement vertical sans rotation, afin de faciliter l'adaptation d'un moyen d'éclairage.

Par ailleurs, la rondelle de fixation 1 est fixée au corps du moulin par collage. La rondelle de fixation 1 est munie d'un logement 1e destiné au passage d'une douille

Cette cassette universelle telle que décrite est prévue notamment pour des moulins dont le corps présente un diamètre minimum de 54 millimètres. Dès que ce diamètre augmente, une bague d'adaptation sera ajoutée ou réalisée directement dans le matériau du moulin. Si le diamètre du moulin diminue, la cassette selon l'invention ne permet plus le passage pour un tube support de lampe.

Par ailleurs, bien que des encoches d'indexation soient présentes pour retrouver rapidement un réglage déterminé, toutes les positions intermédiaires restent possibles, sans qu'il y ait un risque quelconque de déréglage involontaire.

Bien que l'invention ait été décrite avec des moyens de réalisation particuliers, elle comprend tous les équivalents techniques des moyens décrits dans le cadre des revendications attachées.

## Revendications

1. Dispositif universel destiné au réglage de la mouture d'un condiment ou de la réduction d'un aliment, constitué d'une cassette, munie d'une bague de réglage 3, d'une coulisse support cuvette 2 et d'une rondelle de fixation 1, **caractérisé en ce que** le mouvement de rotation de la bague de commande du réglage 3 entraîne un mouvement axial de la coulisse support cuvette 2, entraînant à son tour le mouvement de la rondelle de fixation 1 fixée sur le corps du moulin ou de l'appareil, ladite cassette étant fixée sur ledit corps du moulin ou de l'appareil au moyen de deux trous filetés 1 b disposés sur la rondelle de fixation 1 et destinés à recevoir un dispositif de fixation tel que des vis, ladite cassette étant adaptée audit corps au moyen d'une virole 6 insérée sur la bague de commande 3 par l'intermédiaire d'une collerette 3f.

2. Dispositif universel de réglage selon la revendication 1, **caractérisé en ce que** la bague de commande 3 entraîne la coulisse support cuvette 2 au moyen d'un filetage interne 3a présent sur la bague de commande 3 correspondant à un filetage externe 2c de la coulisse support cuvette.

3. Dispositif universel de réglage selon l'une des revendications précédentes, **caractérisé en ce que** ledit dispositif est fixé sur le corps du moulin par l'intermédiaire de la rondelle de fixation 1.

4. Dispositif universel de réglage selon l'une des revendications précédentes, **caractérisé en ce que** la bague de commande 3 est munie d'une butée mobile 4, présentant un doigt d'indexage 4a.

5. Dispositif universel de réglage selon la revendication 4, **caractérisé en ce que** le doigt d'indexage 4a de la butée mobile 4 se positionne dans des encoches 2b de la coulisse support cuvette 2.

6. Dispositif universel de réglage selon la revendication 4, **caractérisé en ce que** la butée mobile 4 présente un dégagement 4c en son centre, lui conférant une certaine souplesse.

7. Dispositif universel de réglage selon l'une des revendications précédentes, **caractérisé en ce que** la rondelle de fixation 1 est munie d'un pont assurant la liaison avec l'axe de manoeuvre de la poire.

8. Dispositif universel de réglage selon l'une des revendications précédentes, **caractérisé en ce que** la liaison entre la rondelle de fixation 1 et la coulisse support cuvette 2 est réalisée au moyen de deux bossages 2f sur la coulisse support cuvette s'insérant dans deux logements 1a dans la rondelle de fixation 1.

9. Dispositif universel de réglage selon l'une des revendications précédentes, **caractérisé en ce que** le filetage externe 2c de la coulisse support cuvette est interrompu à certains endroits.

10. Dispositif universel de réglage selon l'une des revendications précédentes, **caractérisé en ce que** la coulisse support cuvette 2 est munie d'une butée 2a limitant le mouvement de la bague de commande 3.

11. Dispositif universel de réglage selon l'une des revendications précédentes, **caractérisé en ce que** la coulisse support cuvette 2 est munie en son centre d'un décrochement 2e évitant la remontée de produit dans le mécanisme de mouture ou de réduction.

12. Dispositif universel de réglage selon l'une des revendications précédentes, **caractérisé en ce que** la bague de commande 3 et la rondelle de fixation 1 sont clipsées entre elles.

13. Dispositif universel due réglage selon l'une des revendications précédentes, **caractérisé en ce que** la bague de commande 3 est munie d'ergots 3e destinés à entraîner mécaniquement ladite bague 3.

14. Moulin à condiments ou appareil destiné à la réduction d'un aliment avec un dispositif universel de réglage selon l'une des revendications précédentes, **caractérisé en ce qu'**il est muni d'une cassette universelle adaptée sur le corps dudit moulin ou dudit appareil grâce à une virole 6.

## Claims

1. Universal device for adjusting the grinding of a condiment or the breaking up of a foodstuff, consisting of a cassette formed by an adjusting ring 3, a dish-holder slide 2 and a fixing disk 1, **characterised in that** the rotational movement of the adjusting ring 3 moves the dish-holder slide 2 axially, the latter in turn moving the fixing disc 1 placed onto the body of the mill or of the apparatus, said cassette being fixed onto said body of the mill or of the device by means of two threaded holes 1 b arranged on the fixing disc 1 and designed to receive a fixing device such as screws, said cassette being adjusted to said body by means of a ferrule 6 inserted onto the adjusting ring 3 by means of a collar 3f.

2. Universal adjustment device according to claim 1, **characterised in that** the adjusting ring 3 drives the dish-holder slide 2 by means of an internal screw thread 3a present on the adjusting ring 3 corresponding to an external screw thread 2c of the dish-holder slide.

3. Universal adjustment device according to any one of the preceding claims, **characterised in that** said device is attached to the body of the mill by means of the fixing disc 1.

4. Universal adjustment device according to any one of the preceding claims, **characterised in that** the adjusting ring 3 is provided with a movable stop 4 with an indexing finger 4a.

5. Universal adjustment device according to claim 4, **characterised in that** the indexing finger 4a of the movable stop 4 is positioned in notches 2b in the dish-holder slide 2.

6. Universal adjustment device according to claim 4, **characterised in that** the movable stop 4 has an opening 4c at its centre giving it some flexibility.

7. Universal adjustment device according to any one of the preceding claims, **characterised in that** the fixing disc 1 has a bridge for connection to the operating shaft of the grinding block.

8. Universal adjustment device according to any one of the preceding claims, **characterised in that** the connection between the fixing disc 1 and the dish-holder slide 2 is achieved by means of two bosses 2f on the dish-holder slide which are inserted in two housings 1 a of the fixing disc 1.

9. Universal adjustment device according to any one of the preceding claims, **characterised in that** the external screw thread 2c of the dish-holder slide is interrupted at certain points.

10. Universal adjustment device according to any one of the preceding claims, **characterised in that** the dish-holder slide 2 has a stop 2a that limits the movement of the adjusting ring 3.

11. Universal adjustment device according to any one of the preceding claims, **characterised in that** the dish-holder slide 2 is provided in its centre with a projection 2e that prevents any of the product from getting back into the grinding or breaking-up mechanism.

12. Universal adjustment device according to any one of the preceding claims, **characterised in that** the adjusting ring 3 and the fixing disc 1 are clipped together.

13. Universal adjustment device according to any one of the preceding claims, **characterised in that** the adjusting ring 3 is provided with lugs 3e for driving said ring 3 mechanically.

14. Condiment mill or apparatus for breaking up a foodstuff with a universal adjustment device according to any one of the preceding claims, **characterised in that** it is provided with a universal cassette adapted to the body of said mill or of said apparatus by virtue of a ferrule 6.

## Patentansprüche

1. Universaleinstellvorrichtung für das Zermahlen eines Würzmittels oder das Zerkleinern eines Nahrungsmittels, die aus einer Kassette gebildet ist, die über einen Einstellring 3, über eine Schalenträgerführung 2 und über eine Feststellscheibe 1 verfügt, **dadurch gekennzeichnet, dass** die Drehbewegung des Einstellsteuerrings 3 eine axiale Bewegung der Schalenträgerführung 2 bewirkt, die wiederum die Bewegung der auf dem Korpus der Mühle oder des Apparats angebrachten Feststellscheibe 1 bewirkt, wobei die Kassette mittels zweier Gewindelöcher 1 b an dem Körper der Mühle oder des Apparates befestigt ist, die an der Feststellscheibe 1 angebracht und dazu eingerichtet sind, eine Befestigungsvorrichtung wie Schrauben aufzunehmen, wobei die Kassette durch einen Mantel 6, der über einen Flansch 3f an dem Steuerring 3 angebracht ist, an den Körper angepasst ist.

2. Universaleinstellvorrichtung nach Anspruch 1, **dadurch gekennzeichnet, dass** der Steuerring 3 die Schalenträgerführung 2 durch ein Innengewinde 3a mit sich zieht, das auf dem Steuerring 3 vorhanden ist und einem Außengewinde 2c der Schalenträgerführung entspricht.

3. Universaleinstellvorrichtung nach einem der vorangehenden Ansprüche, **dadurch gekennzeichnet, dass** die Vorrichtung durch die Befestigungsscheibe 1 an dem Mühlenkörper befestigt ist.

4. Universaleinstellvorrichtung nach einem der vorangehenden Ansprüche, **dadurch gekennzeichnet, dass** der Steuerring 3 über einen beweglichen Anschlag 4 verfügt, der einen Schaltfinger 4a aufweist.

5. Universaleinstellvorrichtung nach Anspruch 4, **dadurch gekennzeichnet, dass** sich der Schaltfinger 4a des beweglichen Anschlags 4 in Nuten 2b der Schalenträgerführung 2 einfügt.

6. Universaleinstellvorrichtung nach Anspruch 4, **dadurch gekennzeichnet, dass** der bewegliche Anschlag 4 in der Mitte eine Aussparung 4c aufweist, was ihm eine gewisse Nachgiebigkeit verleiht.

7. Universaleinstellvorrichtung nach einem der vorangehenden Ansprüche, **dadurch gekennzeichnet, dass** die Feststellscheibe 1 mit einer Brücke versehen ist, die die Verbindung mit der Steuerungsachse des Kegelmahlteils sicherstellt.

8. Universaleinstellvorrichtung nach einem der vorangehenden Ansprüche, **dadurch gekennzeichnet, dass** die Verbindung zwischen der Feststellscheibe 1 und der Schalenträgerführung 2 durch zwei Erhebungen 2f auf der Schalenträgerführung erreicht wird, die in zwei Ausnehmungen 1a in der Feststellscheibe 1 einfügbar sind.

9. Universaleinstellvorrichtung nach einem der vorangehenden Ansprüche, **dadurch gekennzeichnet, dass** das Außengewinde 2c der Schalenträgerführung an einigen Stellen unterbrochen ist.

10. Universaleinstellvorrichtung nach einem der vorangehenden Ansprüche, **dadurch gekennzeichnet, dass** die Schalenträgerführung 2 einen Anschlag 2a aufweist, der die Bewegung des Steuerrings 3 begrenzt.

11. Universaleinstellvorrichtung nach einem der vorangehenden Ansprüche, **dadurch gekennzeichnet, dass** die Schalenträgerführung 2 in der Mitte einen Versatz 2e aufweist, wodurch ein Wiederaufsteigen des Produkts in dem Zermahlungs- oder Zerkleinerungsmechanismus verhindert wird.

12. Universaleinstellvorrichtung nach einem der vorangehenden Ansprüche, **dadurch gekennzeichnet, dass** der Steuerring 3 und die Feststellscheibe 1 miteinander verclipst sind.

13. Universaleinstellvorrichtung nach einem der vorangehenden Ansprüche, **dadurch gekennzeichnet, dass** der Steuerring 3 über Nasen 3e verfügt, die dazu eingerichtet sind, den Ring 3 mechanisch mitzunehmen.

14. Gewürzmühle oder Apparat zum Zerkleinern eines Nahrungsmittels mit einer Universaleinstellvorrichtung nach einem der vorangehenden Ansprüche, **dadurch gekennzeichnet, dass** sie/er eine mit einem Mantel 6 an den Körper der Mühle oder des Apparats angepasste Universalkassette aufweist.
